# EUROPEAN PATENT SPECIFICATION

(11) **EP 1 703 166 B1**
(45) Date of publication and mention of the grant of the patent: **01.07.2009**
(21) Application number: 06004929.3
(22) Date of filing: 10.03.2006
(51) Int. Cl.: F16F 9/34, F16F 9/516, E05F 5/02

(54) **Damping device for pieces of furniture**
Dämpfer für Möbel
Amortisseur pour meubles

(30) Priority: 15.03.2005 IT MI20050420
(43) Date of publication of application: 20.09.2006
(73) Proprietor: Agostino Ferrari S.p.A., 24122 Bergamo (IT)
(72) Inventor: Migli, Carlo, 23900 Lecco (IT)
(74) Representative: Bottero, Claudio

(56) References cited:
- FR-A- 2 586 266
- US-A- 1 934 288
- US-A- 3 939 947
- US-A1- 2003 075 845

## Description

The present invention refers to a damping device, in particular to a damping device for damping impacts of mobile parts in pieces of furniture.

The invention also refers to a piece of furniture comprising such a damping device.

In the field of pieces of furniture of various types and for different uses comprising mobile parts, such as, for example, sliding doors or drawers, it is known to use damping devices to dampen impacts of such mobile parts when they come into abutment with the fixed structure of the respective piece of furniture. The occurrence of impacts, as well as being unpleasant for users, can indeed in the long term compromise the functionality of the pieces of furniture.

A type of damping device commonly used for the aforementioned purposes is represented by linear hydraulic dampers, essentially consisting of a piston slidably mounted inside a casing containing a viscous fluid, responsible for the damping effect. The piston defines two regions with variable volume inside the casing: when the force of an impact discharges on a stem associated with the piston, the viscous fluid is forced to pass from a first region where the pressure increases to a second low-pressure region where the fluid is collected. When the thrust exerted on the stem ceases, a spring resets the piston and the stem and the fluid is taken back into the first region, so that the damper is ready for another working cycle.

Although damping devices of this type are known also in other technical fields, the versions used in the furniture industry must satisfy specific operating requirements, as well as strict demands of cost-effectiveness and compactness that are essential in this field, determining the special structural and functional characteristics thereof.

In particular, in damping devices for pieces of furniture of the type described above there is the requirement of having sufficiently low resetting forces. Indeed, the rigidity of the resetting springs must not exceed a certain limit, beyond which the stem is prevented from properly reentering the casing during the damping action and therefore the correct abutment of the mobile part with respect to the fixed structure of a piece of furniture is prevented (for example, a door that is being closed can remain partially open if the strength of the resetting spring added to the viscous friction is greater than the force applied on the door by the closing device). The force that the resetting spring must exert is directly proportional to the friction exerted on the piston and on the stem by the viscous fluid, which friction, on the other hand, is wished to be sufficiently high to allow a suitable damping of the impacts.

In order to satisfy the aforementioned requirement without compromising the damping function, damping devices have been proposed wherein the piston is equipped with one or more ducts suitable for placing in fluid communication the two regions with variable volume defined by the piston inside the casing. Such ducts are closed by suitable means when the piston carries out the working stroke, i.e. the stroke in which the damping of the impact takes place, so that the viscous fluid can pass from one region to the other only at an hollow space between piston and inner wall of the casing. During the subsequent reset stroke, i.e. the stroke in which the piston and the stem are taken back to their initial position to carry out another working cycle, the ducts are not closed and therefore the overall passage area available to the fluid to pass from one region to the other is greater. This contributes to decrease the friction on the piston and consequently the force required for the resetting spring.

A damping device of this type is for example described in document US 2003/0075845 A1 that discloses a hydraulic damper for mobile parts of pieces of furniture comprising a cylinder and a piston slidable inside it. The piston is equipped with at least one opening for the passage of a damping fluid present in the cylinder and with at least one elastically yielding annular disc arranged in the region of the opening so as to at least partially cover it during the working stroke of the piston.

Although it is substantially able to satisfy the requirement of a low resetting force as discussed above, the aforementioned hydraulic damper has a somewhat complex structure, which makes it complicated to manufacture, also to the detriment of its cost-effectiveness.

The purpose of the present invention is to provide a damping device that is able to satisfy the technical requirements outlined above and is constructively simpler and more cost-effective compared to those of the prior art.

According to a first aspect thereof, the present invention therefore refers to a damping device, in particular for damping impacts of mobile parts in pieces of furniture, comprising:
- a casing containing a viscous fluid;
- a piston slidably mounted inside the casing and defining two regions with variable volume inside the casing, said regions being in fluid communication at at least one duct defined in the piston and at an hollow space defined between the outer surface of the piston and the inner surface of the casing,
characterised in that the piston comprises a floating shutter suitable for closing said at least one duct defined in the piston during the working stroke of the piston and for opening said at least one duct defined in the piston during the reset stroke of the piston.

The damping device of the invention allows a substantial reduction in the reset force to be obtained in a particularly simple way without the damping capability being compromised. In fact, the floating shutter is effectively able to automatically close or open the duct defined in the piston by means of the combination of the motion of the piston itself and the pressure of the viscous fluid in the two regions with variable volume defined by the piston inside the casing.

During the working stroke, the piston partially compresses the viscous fluid in a first region with variable volume. The motion of the piston combined with the pressure increase in the first region with variable volume causes the floating shutter to be thrust against the piston so as to close the duct defined in it. In this condition, the only passage available to the viscous fluid towards a second region with variable volume consists of the small hollow space defined between the outer surface of the piston and the inner surface of the casing, for which reason the resistance against the motion of the piston is high.

In the reset stroke, on the other hand, the piston inverts its motion and the viscous fluid in the second region with variable volume is partially compressed. The motion of the piston combined with the pressure increase in the second region with variable volume causes the floating shutter to move away from the piston, therefore freeing the duct defined in the piston. In this condition, the viscous fluid can flow from the second to the first region with variable volume both through the aforementioned hollow space and through the duct defined in the piston, for which reason the resistance against the motion of the piston and, consequently, the resetting force are substantially low.

It can be seen that the operation described above is obtained through the use of a significantly low number of components, and it is thus clear that the invention advantageously provides a damping device not only functionally and structurally simpler than those of the prior art, but also having very low manufacturing costs.

Preferred characteristics of the damping device according to the invention are defined in the attached claims 2-13, the content of which is here fully incorporated as a reference.

According to a second aspect thereof, the present invention refers to a piece of furniture comprising a damping device of the aforementioned type.

Of course, the advantageous characteristics outlined above with reference to the damping device of the present invention define as many advantageous characteristics of the piece of furniture in which the damping device can be mounted, said piece of furniture therefore being structurally and functionally simpler and less expensive.

Further characteristics and advantages of the invention shall become clearer from the following description of some preferred embodiments thereof, made hereafter, for indicating and not limiting purposes, with reference to the attached drawings. In such drawings:
- figure 1 is an exploded perspective view of a damping device according to the invention;
- figure 2 is a side view of a casing of the damping device of figure 1;
- figure 3 is a longitudinal section view taken along the line A-A of the casing of figure 2;
- figure 4 is a side view of a cap of the damping device of figure 1;
- figures 4a, 4b are respectively a front and a rear view of the cap of figure 4;
- figure 5 is a longitudinal section view taken along the line B-B of the cap of figure 4;
- figure 6 is a side view of a piston of the damping device of figure 1;
- figures 6a, 6b are respectively a front and a rear view of the piston of figure 6;
- figure 7 is a longitudinal section view taken along the line C-C of the piston of figure 6;
- figure 8 is a side view of the piston of figure 6 operatively associated with a floating shutter in a first operating position;
- figure 8a is a longitudinal section view taken along the line D-D of the piston of figure 8;
- figure 9 is a side view of the piston of figure 6 operatively associated with a floating shutter in a second operating position;
- figure 9a is a longitudinal section view taken along the line E-E of the piston of figure 9;
- figure 10 is a side view of the damping device of figure 1 in a first operating configuration;
- figure 10a is a longitudinal section view taken along the line F-F of the damping device of figure 10;
- figure 11 is a side view of the damping device of figure 1 in a second operating configuration;
- figure 11a is a longitudinal section view taken along the line G-G of the damping device of figure 11.

In such figures, a damping device according to the invention is wholly indicated with reference numeral 100.

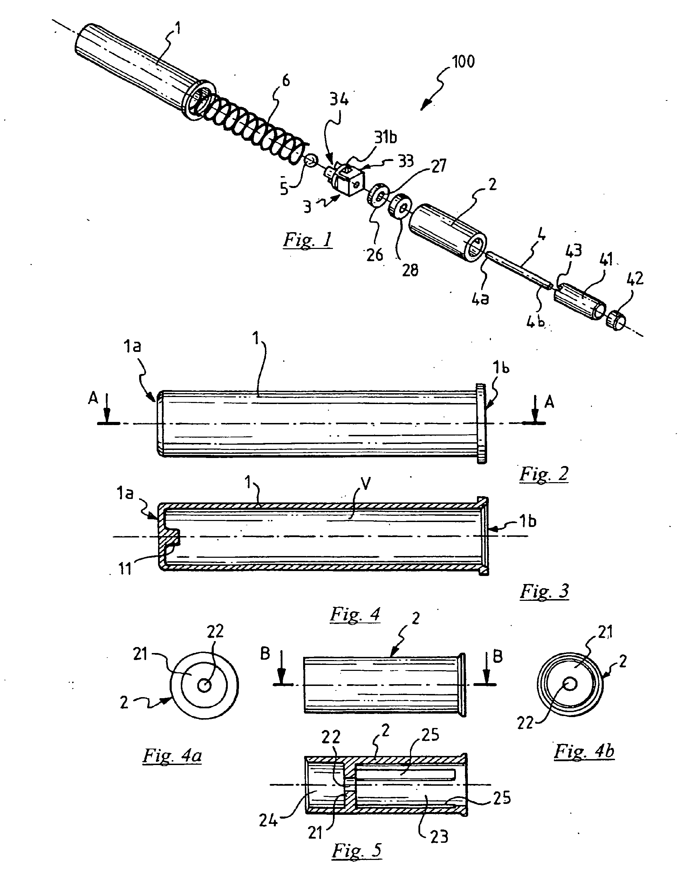

The damping device 100 (fig. 1) essentially comprises a casing 1, a cap 2 that substantially closes the casing 1 making a seal with the inner surface thereof, a piston 3 slidably mounted inside the casing 1, a stem 4 associated with the piston 3 and a resetting element 6.

The casing 1 (figs. 2 and 3) is preferably cylindrical and has a first longitudinal end 1a closed and a second longitudinal end 1b open to allow the insertion of the piston 3 and of other components inside the casing 1. After the assembly of such components, the cap 2 is applied at the longitudinal end 1b. Inside the casing 1 at the longitudinal end 1a a boss 11 is formed defining an abutment for the piston 3.

The casing 1 defines a volume V inside it suitable for receiving the aforementioned components and containing a viscous fluid responsible for the damping action. Such a viscous fluid is preferably a silicon-based fluid, of the type commonly known to those skilled in the art and available on the market.

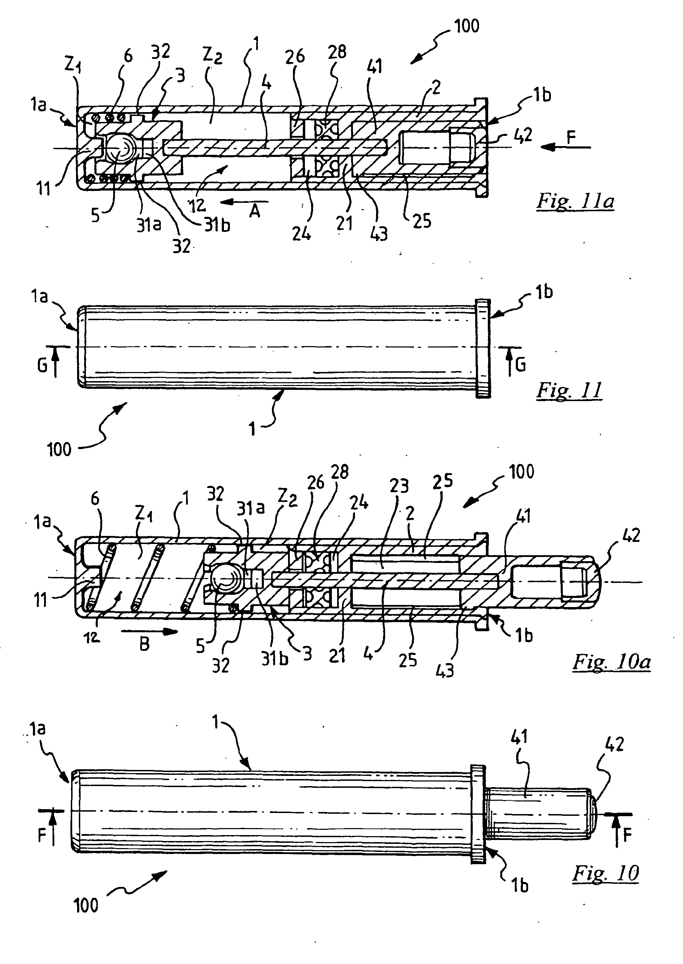

The cap 2 (figs. 4, 4a, 4b and 5) preferably consists of a hollow body that is substantially cylindrical, or in any case has cross section and outer dimensions such as to allow it to be mounted coaxially inside the casing 1 at the end 1b for at least one portion of the cap 2 and, preferably, for the entire longitudinal extension thereof, as illustrated in figures 10a and 11a.

In the preferred embodiment considered here and as better illustrated in figure 5, a transverse wall 21 having a central hole 22 for the passage of the stem 4 divides the space inside the cap 2 into two cavities 23, 24 respectively open towards the outside and towards the inside of the casing 1, with reference to the assembly configuration of the cap 2.

The cavity 24 is further axially defined by an annular partition 26 (visible in figs. 1, 10a and 11a), having a central hole 27 coaxial with hole 22 for the passage, with a predetermined radial clearance, of the stem 4. Preferably, a ring-shaped floating gasket 28 is slidably mounted inside the cavity 24. The cavity 24 and the floating gasket 28 define a compensation system for the volume of viscous fluid displaced by the stem 4 during the operation of the damping device 100. Preferably, the annular partition 26 is removably associated with the cap 2, so as to allow the floating gasket 28 to be easily mounted in the cavity 24.

The stem 4 has a first end 4a at which it is associated with the piston 3 and a second end 4b axially projecting outside the casing 1 at the cap 2 in the rest configuration of the damping device 100 (figs. 10, 10a). Preferably, the second end 4b of the stem 4 is associated with a push rod 41. The push rod 41 is preferably equipped with an abutment element 42 made from rubber to muffle the noise of the impacts.

The cavity 23 of the cap 2 defines a seat for receiving the push rod 41 and is preferably adapted to receive such a push rod substantially completely in the operative configuration in which the piston 3 is at the end of its working stroke (figs. 11, 11a). In order to avoid the accidental detachment of the push rod 41 from the stem 4, at least one longitudinal groove 25 having an axially outer end positioned at a predetermined distance from the outer edge of the cavity 23 is preferably defined on the inner surface of the cavity 23, said groove being adapted to slidably receive at least one projection 43 extending laterally from the push rod 41.

The piston 3 is slidably mounted inside the casing 1 and defines inside it two regions Z₁, Z₂ with variable volume that are in fluid communication with each other at at least one duct 31 defined in the piston 3 and at an hollow space 32 defined between the outer surface of the piston 3 and the inner surface of the casing 1.

According to the invention, the piston 3 comprises a floating shutter 5 suitable for closing the duct 31 during the working stroke of the piston 3 and for opening the duct 31 during the reset stroke of the piston 3.

In the preferred embodiment illustrated here, the piston 3 comprises a central body 33 and a seat 34 for the floating shutter 5 at least partially defined by projections 35 axially projecting from the central body 33. Preferably, the projections 35 are at least partially elastically yielding, to allow snap assembly of the floating shutter 5 in the seat 34. The floating shutter 5 is preferably substantially spherical. Such a shape ensures a substantial symmetry of the viscous forces acting on the floating shutter 5 independently of the direction of motion of the piston 3.

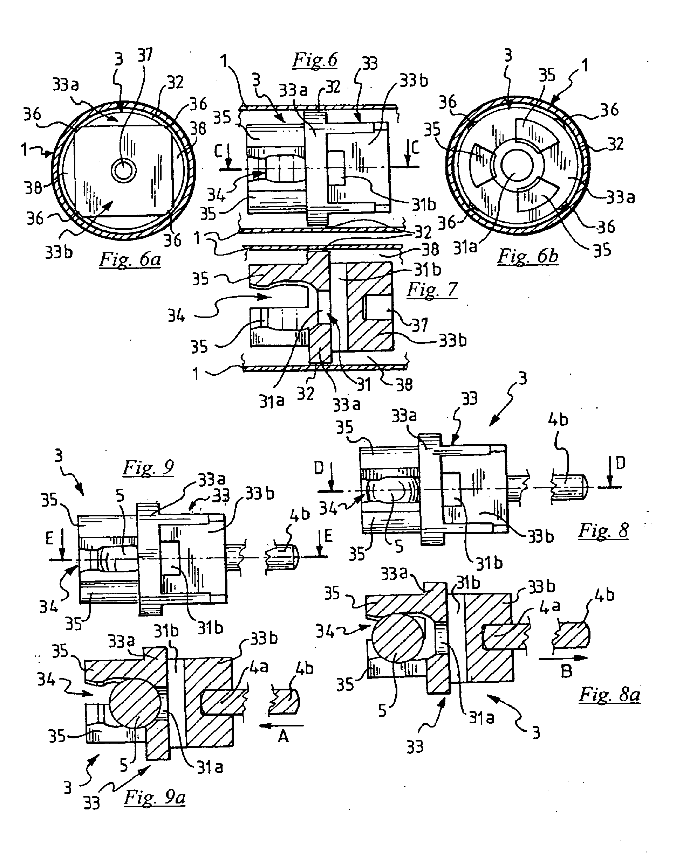

The floating shutter 5 is free to move in the seat 34 between a first operating position in which it opens the duct 31 (figs. 8, 8a and 10a) and a second operating position in which it closes the duct 31 (figs. 9, 9a and 11a), according to the motion of the piston 3 inside the casing 1, as better illustrated hereafter with reference to the operation of the damping device 100.

Preferably, the central body 33 comprises a first portion 33a having a large cross section and a second portion 33b, axially extending from the first portion 33a on the opposite side to the seat 34, which defines with the inner surface of the casing 1 at least one receiving region 38 of the viscous fluid in fluid communication with the duct 31. At the portion 33a the hollow space 32 between outer surface of the piston 3 and inner surface of the casing 1 has the smallest passage area, whereas at the portion 33b the passage area is substantially greater, therefore helping the flow of the viscous fluid from or towards the duct 31.

The first portion 33a is preferably substantially cylindrical and the second portion 33b is preferably substantially prismatic, even more preferably parallelepiped or cubic. The second portion 33b preferably comprises at least two diametrically opposite edges 36 extending radially beyond the first portion 33a. The edges 36, preferably chamfered, are suitable for cooperating with the inner wall of the casing 1 to guide the stroke of the piston 3.

At the second portion 33b a dead hole is also defined in an axial position for receiving the first end 4a of the stem 4, for example through force fitting.

Preferably, the duct 31 defined in the piston 3 comprises at least one substantially axial portion 31a at the first portion 33a of the central body 33 and at least one substantially radial portion 31b at the second portion 33b of the central body 33.

In the case where the aforementioned second portion 33b is prismatic, the at least one substantially radial portion 31b of the duct 31 extends substantially perpendicular to a side face of the second portion 33b of the central body 33.

In the preferred embodiment illustrated here (see in particular figs. 7, 8a, 9a), the substantially radial portion 31b extends between two diametrically opposite side faces of the portion 33b of the central body 33 and is in fluid communication with two receiving regions 38of the viscous fluid, which are defined at opposite sides of the portion 33b between the aforementioned side faces and the inner surface of the casing 1. The duct 31 therefore defines through the piston 3 a substantially T-shaped path for the viscous fluid.

The ratio between the passage area at the minimum cross section of the duct 31 defined in the piston 3 and the passage area at the minimum cross section of the hollow space 32 defined between the outer surface of the piston 3 and the inner surface of the casing 1 is in relation with the distribution of the viscous fluid flow rates between the duct 31 and the hollow space 32. The control of the aforementioned flow rates is relevant for the correct operation of the damping device 100, in particular as far as the resetting force and speed are concerned.

Values of such a ratio preferably between about 0.5 and about 10, more preferably between about 1 and about 4, ensure optimal operation of the damping device 100.

The damping device 100 further comprises a conventional resetting element 6, for example a coil spring, suitable for providing the force required to reset the piston 3 and the stem 4. In the preferred embodiment illustrated here, the resetting element 6 is housed inside the casing 1 and is operatively arranged between the longitudinal end 1a of the casing 1 and the piston 3.

Referring to figures 8a, 9a, 10a and 11a the operation of the damping device 100 shall now be described. Figure 10a shows the damping device 100 in a first operating configuration at rest, when external forces do not act upon the device. In this operating configuration, the resetting element 6 keeps the piston 3 pressed against the annular partition 26 of the cap 2 and the push rod 41 associated with the stem 4 projects from the casing 1 in a state of maximum extension from the respective seat defined in the cavity 23 of the cap 2.

Under an external force F, caused for example by an impact against the push rod 41 following the closing of a mobile part of a piece of furniture, the piston 3 moves in the direction of the arrow A, carrying out the working stroke. The displacement of the piston 3 towards the end 1a of the casing 1 causes a volume reduction of the region Z₁ and a volume increase of the region Z₂. The motion of the piston 3 combined with the pressure increase in the region Z₁ takes and keeps the shutter 5 in its second operative position, in which it closes the portion 31a of the duct 31, thus preventing the passage of the viscous fluid. In this condition, the only passageway available to the viscous fluid towards the region Z₂ consists of the hollow space 32, for which reason the resistance against the motion of the piston 3 and the damping effect are at their maximum. During the working stroke part of the viscous fluid also flows from the region Z₂ into the cavity 24 of the cap 2, to compensate for the volume decrease inside the casing 1 caused by the gradual insertion of the stem 4. The working stroke of the piston 3 ends when the floating shutter 5 comes into abutment against the boss 11 of the casing 1 and the push rod 41 is received substantially completely in the cavity 23 of the cap 2. The damping device 100 is thus in a second operating configuration, represented in figure 11a, and remains in such a configuration until the external force F is applied, for example for all the time the mobile part of a piece of furniture is closed.

When the external force F is removed, the resetting element 6, compressed during the working stroke, determines the reset stroke in which the piston 3 moves in the direction of the arrow B. The displacement of the piston 3 determines a volume reduction of the region Z₂ and a volume increase of the region Z₁. The motion of the piston 3 combined with the pressure increase in the region Z₂ causes the shutter 5 to move away from the piston 3, and takes the shutter 5 into its first operating position, in which it opens the duct 31 in the piston 3. In this condition the viscous fluid can flow from the region Z₂ to the region Z₁ both through the hollow space 32 and through the duct 31. The resistance against the motion of the piston 3 and the required resetting force are thus substantially low. The reset stroke ends when the piston 3 comes into abutment against the annular partition 26 of the cap 2 and the damping device 100 is again in the first operating configuration.

The damping device 100 has a preferred although not exclusive use in pieces of furniture to dampen impacts of mobile parts coming into abutment with a fixed structure of the respective piece of furniture. Thus, the damping device 100 can be installed in a piece of furniture (not illustrated in the figures), comprising a fixed structure, to which the casing 1 of the damping device 100 is fixed, and a mobile part, for example a door or a sliding drawer, which during closing comes into abutment with the damping device 100.

## Claims

1. Damping device (100), in particular for damping impacts of mobile parts in pieces of furniture, comprising:
- a casing (1) containing a viscous fluid;
- a piston (3) slidably mounted inside said casing (1) and defining two regions (Z₁, Z₂) with variable volume inside said casing (1), said regions (Z₁, Z₂) being in fluid communication at at least one duct (31) defined in said piston (3) and at an hollow space (32) defined between the outer surface of said piston (3) and the inner surface of said casing (1),
**characterised in that** said piston (3) comprises a floating shutter (5) suitable for closing said at least one duct (31) defined in the piston (3) during the working stroke of said piston (3) and for opening said at least one duct (31) defined in the piston (3) during the reset stroke of said piston (3).

2. Damping device (100) according to claim 1, wherein said piston (3) comprises a central body (33) and a seat (34) for said floating shutter (5) at least partially defined by projections (35) axially projecting from said central body (33).

3. Damping device (100) according to claim 2, wherein said projections (35) are at least partially elastically yielding.

4. Damping device (100) according to any one of the previous claims, wherein said floating shutter (5) is substantially spherical.

5. Damping device (100) according to any one of claims 2 to 4, wherein said central body (33) comprises a first portion (33a) having a large cross section and a second portion (33b) axially extending from said first portion (33a) on the opposite side to said seat (34), said second portion (33b) defining with the inner surface of said casing (1) at least one receiving region (38) of said viscous fluid in fluid communication with said at least one duct (31).

6. Damping device (100) according to claim 5, wherein said first portion (33a) of said central body (33) is substantially cylindrical.

7. Damping device (100) according to claim 5 or 6, wherein said second portion (33b) of said central body (33) is substantially prismatic.

8. Damping device (100) according to claim 7, wherein said second portion (33b) of said central body (33) comprises at least two diametrically opposite edges (36) extending radially beyond said first portion (33a) of said central body (33) to cooperate with the inner wall of said casing (1) and to guide the stroke of said piston (3).

9. Damping device (100) according to any one of claims 4 to 8, wherein said duct (31) defined in the piston (3) comprises at least one substantially axial portion (31a) at said first portion (33a) of said central body (33) and at least one substantially radial portion (31b) at said second portion (33b) of said central body (33).

10. Damping device (100) according to claim 9 when depending on claim 7, wherein said at least one substantially radial portion (31b) extends substantially perpendicular to a side face of said second portion (33b) of said central body (33).

11. Damping device (100) according to any one of the previous claims, wherein the ratio of the passage area at the minimum cross section of said duct (31) defined in the piston (3) to the passage area at the minimum cross section of said hollow space (32) defined between the outer surface of said piston (3) and the inner surface of said casing (1) is between about 0.5 and about 10.

12. Damping device (100) according to claim 11, wherein the ratio of the passage area at the minimum cross section of said duct (31) defined in the piston (3) to the passage area at the minimum cross section of said hollow space (32) defined between the outer surface of said piston (3) and the inner surface of said casing (1) is between about 1 and about 4.

13. Damping device (100) according to any one of the previous claims comprising a resetting element (6) suitable for providing a resetting force for said piston (3), said resetting element (6) being housed inside said casing (1).

14. Piece of furniture comprising a damping device (100) according to any one of the previous claims.

## Patentansprüche

1. Dämpfer (100), insbesondere zum Dämpfen von Stößen auf bewegliche Teile in Möbelstücken, mit:
- einem Gehäuse (1), das eine viskose Flüssigkeit enthält;
- einem Kolben (3), der verschiebbar innerhalb des Gehäuses (1) befestigt ist und zwei Bereiche (Z₁, Z₂), mit variablem Volumen innerhalb des Gehäuses (1) definiert, wobei die Bereiche (Z₁, Z₂) über mindestens einen Kanal (31), der im Kolben (3) definiert ist, und über einen Hohlraum (32), der zwischen der Außenfläche des Kolbens (3) und der Innenfläche des Gehäuses (1) definiert ist, miteinander in Verbindung stehen,
**dadurch gekennzeichnet, dass**
der Kolben (3) einen schwimmenden Verschluss (5) aufweist, der dazu geeignet ist, den wenigstens einen Kanal (31), welcher im Kolben (3) definiert ist, während des Arbeitshubs des Kolbens (3) zu verschließen und den wenigstens einen Kanal (31), welcher im Kolben (3) definiert ist, während des Rücksetzhubs des Kolbens (3) zu öffnen.

2. Dämpfer (100) nach Anspruch 1, wobei der Kolben (3) einen zentralen Körper (33) und einen Sitz (34) für den schwimmenden Verschluss (5) aufweist, der wenigstens teilweise durch Vorsprünge (35) definiert ist, welche axial vom zentralen Körper (33) abragen.

3. Dämpfer (100) nach Anspruch 2, wobei die Vorsprünge (35) wenigstens teilweise elastisch nachgiebig sind.

4. Dämpfer (100) nach einem der vorangehenden Ansprüche, wobei der schwimmende Verschluss (5) im Wesentlichen kugelförmig ist.

5. Dämpfer (100) nach einem der Ansprüche 2 bis 4, wobei der zentrale Körper (33) einen ersten Abschnitt (33a) mit einem großen Querschnitt und einen zweiten Abschnitt (33b) aufweist, der sich axial vom ersten Abschnitt (33a) aus auf der gegenüberliegenden Seite des Sitzes (34) erstreckt, wobei der zweite Abschnitt (33b) mit der Innenfläche des Gehäuses (1) wenigstens einen Aufnahmebereich (38) der viskosen Flüssigkeit definiert, welcher mit dem wenigstens einen Kanal (31) in Verbindung steht.

6. Dämpfer (100) nach Anspruch 5, wobei der erste Abschnitt (33a) des zentralen Körpers (33) im Wesentlichen symmetrisch ist.

7. Dämpfer (100) nach Anspruch 5 oder 6, wobei der zweite Abschnitt (33b) des zentralen Körpers (33) im Wesentlichen prismenförmig ist.

8. Dämpfer (100) nach Anspruch 7, wobei der zweite Abschnitt (33b) des zentralen Körpers (33) wenigstens zwei sich diametral gegenüberliegende Kanten (36) aufweist, die sich radial über den ersten Abschnitt (33a) des zentralen Körpers (33) hinaus erstrecken, um mit der Innenwand des Gehäuses (1) zusammenzuwirken und den Hub des Kolbens (3) zu führen.

9. Dämpfer (100) nach einem der Ansprüche 4 bis 8, wobei der Kanal (31), welcher im Kolben (3) definiert ist, wenigstens einen im Wesentlichen axialen Abschnitt (31a) an dem ersten Abschnitt (33a) des zentralen Körpers (33) und wenigstens einen im Wesentlichen radialen Abschnitt (31 b) am zweiten Abschnitt (33b) des zentralen Körpers (33) aufweist.

10. Dämpfer (100) nach Anspruch 9, wenn dieser von Anspruch 7 abhängig ist, wobei der wenigstens eine im Wesentlichen radiale Abschnitt (31b) sich im Wesentlichen senkrecht zu einer Seitenfläche des zweiten Abschnitts (33b) des zentralen Körpers (33) erstreckt.

11. Dämpfer (100) nach einem der vorangehenden Ansprüche, wobei das Verhältnis der Durchtrittsfläche beim minimalen Querschnitt des Kanals (31), welcher im Kolben (3) definiert ist, zur Durchtrittsfläche beim minimalen Querschnitt des Hohlraums (32), welcher zwischen der Außenläche des Kolbens (3) und der Innenfläche des Gehäuses (1) ausgebildet ist, zwischen etwa 0.5 und etwa 10 liegt.

12. Dämpfer (100) nach Anspruch 11, wobei das Verhältnis der Durchtrittsfläche beim minimalen Querschnitt des Kanals (31), welcher im Kolben (3) definiert ist, zur Durchtrittsfläche beim minimalen Querschnitt des Hohlraums (32), welcher zwischen der Außenfläche des Kolbens (3) und der Innenfläche des Gehäuses (1) definiert ist, zwischen etwa 1 und etwa 4 liegt.

13. Dämpfer (100) nach einem der vorangehenden Ansprüche, mit einem Rücksetzelement (6), welches dazu geeignet ist, eine Rücksetzkraft auf den Kolben (3) auszuüben, wobei das Rücksetzelement (6) innerhalb des Gehäuses (1) angeordnet ist.

14. Möbelstück mit einem Dämpfer (100) nach einem der vorangehenden Ansprüche.

## Revendications

1. Dispositif d'amortissement (100), en particulier pour amortir des impacts de parties mobiles de meubles, comprenant :
- un carter (1) contenant un fluide visqueux ;
- un piston (3) monté de manière à pouvoir coulisser à l'intérieur dudit carter (1) et définissant deux régions (Z₁, Z₂) avec un volume variable à l'intérieur dudit carter (1), lesdites régions (Z₁, Z₂) étant en communication hydraulique au niveau au moins d'une conduite (31) définie dans ledit piston (3) et au niveau d'un espace creux (32) défini entre la surface extérieure dudit piston (3) et la surface intérieure dudit carter (1),
**caractérisé en ce que** ledit piston (3) comprend un obturateur flottant (5) adapté pour fermer ladite au moins une conduite (31) définie dans le piston (3) pendant la course de travail dudit piston (3) et pour ouvrir ladite au moins une conduite (31) définie dans le piston (3) pendant la course de réinitialisation dudit piston (3).

2. Dispositif d'amortissement (100) selon la revendication 1, dans lequel ledit piston (3) comprend un corps central (33) et un siège (34) pour ledit obturateur flottant (5) au moins partiellement défini par des projections (35) se projetant axialement dudit corps central (33).

3. Dispositif d'amortissement (100) selon la revendication 2, dans lequel lesdites projections (35) sont au moins partiellement flexibles élastiquement.

4. Dispositif d'amortissement (100) selon l'une quelconque des revendications précédentes, dans lequel ledit obturateur flottant (5) est sensiblement sphérique.

5. Dispositif d'amortissement (100) selon l'une quelconque des revendications 2 à 4, dans lequel ledit corps central (33) comprend une première partie (33a) ayant une grande coupe transversale et une deuxième partie (33b) s'étendant axialement de ladite première partie (33a) sur le côté opposé audit siège (34), ladite deuxième partie (33b) définissant avec la surface intérieure dudit carter (1) au moins une région de réception (38) dudit fluide visqueux en communication hydraulique avec ladite au moins une conduite (31).

6. Dispositif d'amortissement (100) selon la revendication 5, dans lequel ladite première partie (33a) dudit corps central (33) est sensiblement cylindrique.

7. Dispositif d'amortissement (100) selon la revendication 5 ou 6, dans lequel ladite deuxième partie (33b) dudit corps central (33) est sensiblement prismatique.

8. Dispositif d'amortissement (100) selon la revendication 7, dans lequel ladite deuxième partie (33b) dudit corps central (33) comprend au moins deux bords diamétralement opposés (36) s'étendant radialement au-delà de ladite première partie (33a) dudit corps central (33) pour coopérer avec la paroi intérieure dudit carter (1) et pour guider la course dudit piston (3).

9. Dispositif d'amortissement (100) selon l'une quelconque des revendications 4 à 8, dans lequel ladite conduite (31) définie dans le piston (3) comprend au moins une partie sensiblement axiale (31a) au niveau de ladite première partie (33a) dudit corps central (33) et au moins une partie sensiblement radiale (31b) au niveau de ladite deuxième partie (33b) dudit corps central (33).

10. Dispositif d'amortissement (100) selon la revendication 9 lorsqu'elle est dépendante de la revendication 7, dans lequel ladite au moins une partie sensiblement radiale (31b) s'étend sensiblement perpendiculairement à une face latérale de ladite deuxième partie (33b) dudit corps central (33).

11. Dispositif d'amortissement (100) selon l'une quelconque des revendications précédentes, dans lequel le rapport de la surface de passage au niveau de la coupe transversale minimale de ladite conduite (31) définie dans le piston (3) sur la surface de passage au niveau de la coupe transversale minimale dudit espace creux (32) défini entre la surface extérieure dudit piston (3) et la surface intérieure dudit carter (1) est comprise entre environ 0,5 et environ 10.

12. Dispositif d'amortissement (100) selon la revendication 11, dans lequel le rapport de la surface de passage au niveau de la coupe transversale minimale de ladite conduite (31) définie dans le piston (3) sur la surface de passage au niveau de la coupe transversale minimale dudit espace creux (32) défini entre la surface extérieure dudit piston (3) et la surface intérieure dudit carter (1) est comprise entre environ 1 et environ 4.

13. Dispositif d'amortissement (100) selon l'une quelconque des revendications précédentes, comprenant un élément de réinitialisation (6) approprié pour fournir une force de réinitialisation pour ledit piston (3), ledit élément de réinitialisation (6) étant logé à l'intérieur dudit carter (1).

14. Meuble comprenant un dispositif d'amortissement (100) selon l'une quelconque des revendications précédentes.
